**Europäisches Patentamt**

**European Patent Office**

**Office européen des brevets**

(19)

(11) Veröffentlichungsnummer : **0 613 231 B1**

(12) ## EUROPÄISCHE PATENTSCHRIFT

(45) Veröffentlichungstag der Patentschrift :
**15.11.95 Patentblatt 95/46**

(51) Int. Cl.$^6$ : **H02M 3/10,** H02M 3/335

(21) Anmeldenummer : **94102493.7**

(22) Anmeldetag : **18.02.94**

(54) **Verfahren und Schaltungsanordnung zum Einregeln einer Ausgangsspannung vorgegebener Höhe aus einer veränderlichen Eingangsspannung.**

(30) Priorität : **26.02.93 DE 4306071**

(43) Veröffentlichungstag der Anmeldung :
**31.08.94 Patentblatt 94/35**

(45) Bekanntmachung des Hinweises auf die
Patenterteilung :
**15.11.95 Patentblatt 95/46**

(84) Benannte Vertragsstaaten :
**AT BE CH DE ES FR GB IT LI NL SE**

(56) Entgegenhaltungen :
**US-A- 4 443 752**
**US-A- 5 134 355**

(73) Patentinhaber : **Siemens Nixdorf**
**Informationssysteme Aktiengesellschaft**
**Fürstenallee 7**
**D-33102 Paderborn (DE)**

(72) Erfinder : **Busch, Peter, Dipl.-Ing. (FH)**
**Flugfeldstrasse 1**
**D-86179 Augsburg (DE)**
Erfinder : **Sterzik, Willi, Dipl.-Ing. (FH)**
**Radetzkystrasse 3**
**D-86165 Augsburg (DE)**

(74) Vertreter : **Fuchs, Franz-Josef, Dr.-Ing. et al**
**Postfach 22 13 17**
**D-80503 München (DE)**

EP 0 613 231 B1

## Beschreibung

Verfahren und Schaltungsanordnung zum
Einregeln einer Ausgangsspannung vorgegebener
Höhe aus einer veränderlichen Eingangsspannung

Die Erfindung betrifft ein Verfahren und eine
Schaltungsanordnung zum Einregeln einer Ausgangsspannung vorgegebener Höhe aus einer veränderlichen Eingangsspannung gemäß den Merkmalen
der Oberbegriffe der Ansprüche 1 und 5.

Auf-Abwärts-Spannungswandler sind bekannt.
Realisierungsmöglichkeiten beispielsweise als sogenannter Buck-Boost-Konverter oder als stromgespeister Gegentaktwandler sind ebenfalls bekannt.

Auf-Abwärts-Spannungswandler sind in der Weise aufgebaut, daß sie sowohl bei einer Eingangsspannung, die kleiner als die Ausgangsspannung ist,
als auch bei einer Eingangsspannung, die größer als
die Ausgangsspannung ist, Energie übertragen. Bei
beiden eingangs genannten Realisierungsmöglichkeiten ist aber darauf zu achten, daß in den jeweiligen
Betriebsarten eine richtige Regelung durchgeführt
wird. Darüberhinaus ist eine Logik notwendig, die die
richtige Betriebsart festlegt.

Als Kriterium für die Umschaltung dient zum Beispiel ein Regelsignal, das von einem Fehlerverstärker und neben einem Pulsweitenmodulator einer Umschaltlogik zugeleitet wird. Die Umschaltlogik erzeugt aus dem Regelsignal ein Erkennungssignal,
das den Auf-Abwärts-Spannungswandler in den einen oder in den anderen Betriebszustand schaltet.

Die Verwendung des von einem Fehlerverstärker
abgeleiteten Regelsignals zur Ableitung des den Betriebszustand des Auf-Abwärts-Spannungswandlers
steuernden Erkennungssignals hat den Vorteil, daß
sowohl für die Aufwärts- als auch für die Abwärts-
Spannungswandlung die gleiche Regeleinrichtung
verwendet werden kann. Der Ablauf der Einregelung
ist derart, daß wenn im Abwärts-Spannungswandelbetrieb des Auf-Abwärts-Spannungswandlers die
Ausgangsspannung absinkt, der Fehlerverstärker
durch Erhöhen der Regelspannung versucht, den
Nennwert der Ausgangsspannung wieder zu erreichen. Gelingt es ihm nicht, steigt die Regelspannung
weiter an. Dies dient als Umschaltkriterium zum Umschalten auf den Aufwärts-Spannungswandelbetrieb. In dieser Betriebsart ist es dem AufAbwärts-
Spannungswandler möglich, auch bei kleinen Eingangsspannungen die Nennausgangsspannung zu
erreichen.

Beim Hochlaufen des Auf-Abwärts-Spannungswandlers nach einem Einschalten ist zu beachten,
daß die Ausgangsspannung zunächst Null Volt aufweist und der Fehlerverstärker eine maximal mögliche Regelspannung erzeugt. Dies hat zur Folge, daß
der Aufwärts-Spannungswandelbetrieb eingeschaltet wird, obwohl aufgrund der vorliegenden Eingangsspannung der Abwärts-Spannungswandelbetrieb
hätte eingeschaltet werden müssen. Da nach dem
Einschalten also die Eingangsspannung höher als die
Ausgangsspannung ist, kommt es zur Sättigung einer
im Auf-Abwärts-Spannungswandler angeordneten
Drossel. Die Strombegrenzung der in dem Auf-Abwärts-Spannungswandler angeordneten Schaltglieder wird eingeschaltet. Die Hochlaufphase des Auf-
Abwärts-Spannungswandlers ist damit problembehaftet.

Das Dokument US-A-5 134 355 offenbart eine
Vorrichtung mit einem Verfahren zum Einregeln einer
Ausgangsspannung vorgegebener Höhe aus einer
veränderlichen Eingangsspannung, ausgeführt
durch einen Auf-Abwärts-Spannungswandler, der
aus einem Regelsignal ein Erkennungssignal zum
Umschalten zwischen einem Aufwärts- und einem
Abwärts-Spannungswandelbetrieb ableitet. Es erfolgt aus der Eingangsspannung und einer wenigstens stellvertretend für die Ausgangsspannung stehenden Größe eine Ermittlung eines dem Erkennungssignal übergeordneten Umschaltsignals, das
zwangsweise eine Einschaltung des Abwärts-Spannungswandelbetriebs des Auf-Abwärts-Spannungswandlers verursacht, wenn die Eingangsspannung
größer ist als die Ausgangsspannung. Für die stellvertretend für die Ausgangsspannung stehende Größe
ist ein konstanter Spannungswert verwendet. Bei
plötzlichen Spannungseinbrüchen während eines regulären Betriebs erfolgt keine Pufferung der für die
Ausgangsspannung stehenden Größe. Die Störempfindlichkeit des Auf-Abwärts-Spannungswandlers ist
dadurch nachteilig beeinflußt.

Aufgabe der Erfindung ist es nun, ein Verfahren
und eine Schaltungsanordnung zum Einregeln einer
Ausgangsspannung vorgegebener Höhe aus einer
veränderlichen Eingangsspannung gemäß der eingangs genannten Art in der Weise anzugeben, daß
beim Hochlaufen des Auf-Abwärts-Spannungswandlers nach dem Einschalten keine Probleme auftreten,
und daß das Betriebsverhalten des Auf-Abwärts-
Spannungswandlers verbessert wird.

Diese Aufgabe wird erfindungsgemäß für das
Verfahren durch die im kennzeichnenden Teil des Anspruchs 1 und für die Schaltungsanordnung durch die
im kennzeichnenden Teil des Anspruchs 5 angegebenen Merkmale gelöst.

Danach wird ein zusätzliches Kriterium für das
Umschalten zu einer der Betriebsarten des Auf-Abwärts-Spannungswandlers berücksichtigt. Neben
der Höhe der Regelspannung des Fehlerverstärkers
wird der Umstand berücksichtigt, ob die Eingangsspannung größer oder kleiner als die Ausgangsspannung ist.

Beim Hochlaufen des Auf-Abwärts-Spannungswandlers nach dem Einschalten treten nicht mehr die
eingangs geschilderten Probleme auf, da der Auf-Abwärts-Spannungswandler nach dem Einschalten zwangsweise in den Abwärts-Spannungswandelbetrieb geschaltet wird.

Ein weiterer Vorteil ist, daß das Betriebsverhalten des Auf-Abwärts-Spannungswandlers insgesamt verbessert wird, da die Störempfindlichkeit verbessert wird.

Nachfolgend wird ein Ausführungsbeispiel der Erfindung anhand einer Zeichnung näher erläutert. Es zeigen:

Figur 1 eine Schaltungsanordnung für die Regelung eines Auf-Abwärts-Spannungswandlers gemäß dem Stand der Technik in Prinzipdarstellung und

Figur 2 eine Schaltungsanordnung gemäß der Erfindung, bei der die Realisierung des Auf-Abwärts-Spannungswandlers als stromgespeister Gegentaktwandler angenommen ist.

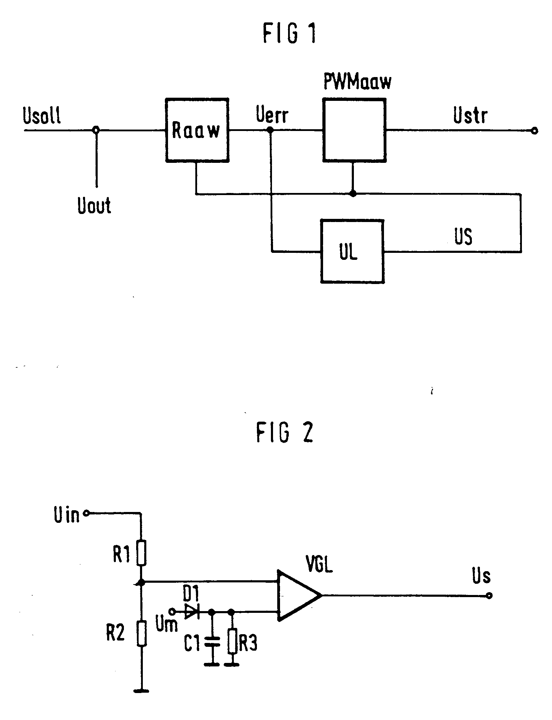

Die in der Figur 1 dargestellte Regelschaltung für einen Auf-Abwärts-Spannungswandler weist einen Fehlerverstärker Raaw, einen Pulsweitenmodulator PWMaaw und eine Umschaltlogik UL auf. Dem Fehlerverstärker Raaw wird eingangsseitig ein Differenzsignal, gebildet aus einer Soll-Spannung Usoll und einer Ausgangsspannung Uout, zugeführt. Die Ausgangsspannung Uout ist die am Ausgang des Auf-Abwärts-Spannungswandlers anliegende Spannung, die hier gleichzeitig zurückgeführt wird. Die Soll-Spannung Usoll gibt an, welche Höhe die Ausgangsspannung Uout haben soll. Die Differenz zwischen der Soll-Spannung Usoll und der Ausgangsspannung Uout stellt ein Maß für den Umfang einer erforderlichen Nachregelung dar.

Der Fehlerverstärker Raaw erzeugt in Abhängigkeit von dem eingangs zugeführten Differenzsignal ein entsprechendes Regelsignal Uerr für den nachfolgenden Pulsweitenmodulator PWMaaw, der über Signale Ustr die Schalttransistoren des Auf-Abwärts-Spannungswandlers ansteuert.

Die Umschaltlogik UL leitet aus der vom Fehlerverstärker Raaw erzeugten Regelspannung Uerr ein Erkennungssignal ab, das in Form eines Umschaltsignals US den Fehlerverstärker Raaw und den Pulsweitenmodulator PWMaaw entweder in einen Auf- oder in einen Abwärts-Spannungswandelbetrieb schaltet.

Ein der Regelschaltung der Figur 1 zugrundeliegender Auf-Abwärts-Spannungswandler kann verschieden realisiert sein. Beispielsweise kann er als stromgespeister Gegentaktwandler realisiert sein. Er weist dann einen Transformator mit einer Primärwicklung mit einem Mittelabgriff auf. An dem Mittelabgriff kann eine Transformatormittelspannung abgegriffen werden, die ein Maß für die Ausgangsspannung Uout des Auf-Abwärts-Spannungswandlers darstellt. Diese Spannung kann anstelle der eigentlichen Ausgangsspannung des Auf-Abwärts-Spannungswandlers zurückgeführt werden. Der Vorteil ist, daß diese Spannung bereits potentialgetrennt ist und damit hierfür keine weiteren Maßnahmen mehr notwendig sind.

Nochmals hingewiesen wird, daß die Transformatormittelspannung stellvertretend für andere mögliche Spannungen steht, die eine Heranziehung der eigentlichen Ausgangsspannung Uout unnötig machen.

Da ein Auf-Abwärts-Spannungswandler die bereits zu Beginn der Beschreibung erwähnten Probleme beim Hochlaufen nach dem Einschalten aufweist, wird der Auf-Abwärts-Spannungswandler durch eine Schaltungsanordnung nach Art der Figur 2 ergänzt. Die in der Figur 2 dargestellte Schaltungsanordnung ist insbesondere geeignet, wenn es sich bei dem Auf-Abwärts-Spannungswandler um einen stromgespeisten Gegentaktwandler handelt.

Kernstück der Schaltungsanordnung nach Figur 2 ist eine Vergleicherschaltung VGL, die ausgangsseitig ein Umschaltsignal Us erzeugt. Das Umschaltsignal Us wird in der in der Figur 1 angegebenen Umschaltlogik UL derart auf das von der Umschaltlogik UL erzeugte Erkennungssignal geschaltet, daß das Umschaltsignal Us gegenüber dem Erkennungssignal dominiert und gegebenenfalls als das Umschaltsignal US der Umschaltlogik UL ausgegeben wird.

Zur Erzeugung des Umschaltsignals Us ist einem ersten Eingang der Vergleicherschaltung VGL über einen Spannungsteiler R1, R2 eine Eingangsspannung Uin des Auf-Abwärts-Spannungswandlers und einem zweiten Eingang beispielsweise die oben erwähnte Transformatormittelspannung, die hier mit Um bezeichnet und auch nachfolgend so benannt ist, zugeführt. Die Transformatormittelspannung Um wird dabei zuerst durch einen Spitzenwertgleichrichter D1 gleichgerichtet. Der sich durch die Gleichrichtung ergebende Scheitelwert wird in einem Zeitspeicher C1, R3 mit einer sich durch den Kondensator C1 und dem Widerstand R3 festgelegten Zeitkonstante gespeichert. Der gespeicherte Scheitelwert der Transformatormittelspannung Um ist letztlich der Wert, der der Vergleicherschaltung zugeführt wird.

Die Zeitkonstante ist in der Weise zu wählen, daß der gespeicherte Scheitelwert dem tatsächlichen Scheitelwert der Ausgangsspannung Uout folgen kann. Deweiteren ist die Zeitkonstante sinnvollerweise auch so gewählt, daß beispielsweise 10 Schaltimpulse der Schalttransistoren des Auf-Abwärts-Spannungswandlers überdeckt werden. Damit ist bei plötzlichen Spannungseinbrüchen während eines regulären Betriebs eine entsprechende Pufferung des Scheitelwertes gewährleistet.

Eine Dimensionierung der Widerstände R1 und R2 des Spannungsteilers R1, R2 wird vorzugsweise gemäß folgender mathematischer Beziehung vorgenommen:

$$k \times Um = Uin \times \frac{R2}{R1 + R2}$$

mit k ungefähr 0,95

Der Multiplikationsfaktor k soll mit ungefähr 0,95 gewählt werden, um in jedem Fall eine sichere Funktion zu gewährleisten.

Insgesamt arbeitet eine Schaltungsanordnung gemäß der Figur 1 in Verbindung mit einer Schaltungsanordnung nach Figur 2 oder in Verbindung mit einer der Schaltungsanordnungen nach Figur 2 ähnelnden Schaltungsanordnung in folgender Weise: Neben der Ableitung eines Erkennungssignals zum Umschalten zwischen den verschiedenen Spannungswandelbetrieben des Auf-Abwärts-Spannungswandlers aus der Eingangsspannung Uin und einer wenigstens stellvertretend für die Ausgangsspannung Uout stehenden Größe, beispielsweise der Transformatormittelspannung Um aus Figur 2, wird eine Ermittlung eines dem Umschaltsignal US der Umschaltlogik UL eines bisher bekannten Auf-Abwärts-Spannungswandlers übergeordneten Umschaltsignals Us durchgeführt, das zwangsweise den Abwärts-Spannungswandelbetrieb einschaltet, wenn die Eingangsspannung Uin des Auf-Abwärts-Spannungswandlers größer ist als die zugehörige Ausgangsspannung Uout.

**Patentansprüche**

1. Verfahren zum Einregeln einer Ausgangsspannung (Uout) vorgegebener Höhe aus einer veränderlichen Eingangsspannung (Uin), ausgeführt durch einen Auf-Abwärts-Spannungswandler, der aus einem Regelsignal (Uerr) ein Erkennungssignal zum Umschalten zwischen einem Aufwärts- und einem Abwärts-Spannungswandelbetrieb ableitet, wobei aus der Eingangsspannung (Uin) und einer wenigstens stellvertretend für die Ausgangsspannung (Uout) stehenden Größe eine Ermittlung eines dem Erkennungssignal übergeordneten Umschaltsignals (Us) erfolgt, das zwangszweise eine Einschaltung des Abwärts-Spannungswandelbetriebs des Auf-Abwärts-Spannungswandlers verursacht, wenn die Eingangsspannung (Uin) größer ist als die Ausgangsspannung (Uout),
   **dadurch gekennzeichnet,**
   daß die wenigstens stellvertretend für die Ausgangsspannung (Uout) stehende Größe einer Spitzenwertgleichrichtung und einer nachfolgenden Zeitspeicherung mit einer vorgegebenen Zeitkonstante eines solchen Wertes unterzogen wird, daß ein Nachfolgen des Scheitelwertes der Spitzenweggleichrichtung an den Verlauf des Scheitelwertes der der Spitzenwertgleichrichtung unterzogenen Größe gewährleistet ist, und daß die Zeitkonstante zusätzlich in der Weise eingestellt wird, daß Schaltimpulse des Auf-Abwärts-Spannungswandlers in einer Größenordnung von 10 durch diese Zeitkonstante überdeckt werden.

2. Verfahren nach Anspruch 1 in Verbindung mit einem stromgespeisten Gegentaktwandler als Auf-Abwärts-Spannungswandler, der einen Transformator mit einer Primärwicklung aufweist, der ein Mittelabgriff zugeordnet ist, an dem eine Transformator mittelspannung (Um) abgegriffen werden kann,
   **dadurch gekennzeichnet,**
   daß für die wenigstens stellvertretend für die Ausgangsspannung (Uout) stehende Größe zur Ermittlung des übergeordneten Umschaltsignals die Transformatormittelspannung (Um) des Transformators des stromgespeisten Gegentaktwandlers verwendet wird.

3. Schaltungsanordnung zum Einregeln einer Ausgangsspannung (Uout) vorgegebener Höhe aus einer veränderlichen Eingangsspannung (Uin), ausgeführt durch einen Auf-Abwärts-Spannungswandler, der eine Umschaltlogik (UL) aufweist, die aus einem Regelsignal (Uerr) ein Erkennungssignal zum Umschalten zwischen einem Aufwärts- und einem Abwärts-Spannungswandlerbetrieb erzeugt, und der eine Vergleicherschaltung (VGL) mit einem Ausgang für ein Umschaltsignal (Us) aufweist, der mit Schaltungsteilen des Auf-Abwärts-Spannungswandlers in der Weise verbunden ist, daß das Umschaltsignal (Us) dem Erkennungssignal gegenüber übergeordnet wirkt und bei einer größeren Eingangsspannung (Uin) als die Ausgangsspannung (Uout) zwangsweise eine Einschaltung des Abwärts-Spannungswandelbetriebs verursacht,
   **dadurch gekennzeichnet,**
   daß die Vergleicherschaltung (VGL) mit einem ersten Eingang mit der Eingangsspannung (Uin) und mit einem zweiten Eingang mit einer wenigstens stellvertretend für die Ausgangsspannung stehenden Größe verbunden ist,
   daß an dem zweiten Eingang der Vergleicherschaltung (VGL) für die wenigstens stellvertretend für die Ausgangsspannung (Uout) stehende Größe ein Spitzenwertgleichrichter (D1) und ein Zeitspeicher (C1, R3) mit einer vorgegebenen Zeitkonstante in der Größenordnung eines Mehrfachen der Schaltimpulse des Auf-Abwärts-Spannungswandlers angeschlossen ist.

**Claims**

1. Method for regulation of an output voltage (Uout) at a predetermined level from a variable input voltage (Uin) implemented by means of a step-up/step-down voltage converter which uses a regulating signal (Uerr) to derive an identification signal for switching over between a step-up and a step-down voltage conversion mode, a changeover signal (Us) which is at a hierarchically superior level than the identification signal, being determined from the input voltage (Uin) and a variable which at least represents the output voltage (Uout), which changeover signal (Us) necessarily causes the step-down voltage conversion mode of the step-up/step-down voltage converter to be selected when the input voltage (Uin) is greater than the output voltage (Uout), characterized in that the variable which at least represents the output voltage (Uout) is subjected to peak detection and subsequent time storage using a predetermined time constant of such a value that it is guaranteed that the peak value of the peak detection follows the course of the peak value of the variable which is subjected to peak detection, and in that the time constant is additionally set in such a manner that switching pulses of the step-up/step-down voltage converter are covered by this time constant to an order to magnitude of 10.

2. Method according to Claim 1, in conjunction with a current-fed push-pull converter as the step-up/step-down voltage converter, which has a transformer with a primary winding to which a centre tap is assigned on which a transformer mean voltage (Um) can be picked off, characterized in that the transformer mean voltage (Um) of the transformer of the current-fed push-pull converter is used for the variable, which at least represents the output voltage (Uout), for determining the hierarchically superior changeover signal.

3. Circuit arrangement for regulation of an output voltage (Uout) at a predetermined level from a variable input voltage (Uin) implemented by means of a step-up/step-down voltage converter which has a changeover logic (UL) which uses a regulating signal (Uerr) to produce an identification signal for switching over between a step-up and a step-down voltage converter mode, and which has a comparator circuit (VGL) with an output for a changeover signal (Us) which is connected to circuit parts of the step-up/step-down voltage converter in such a manner that the changeover signal (Us) acts in a hierarchically superior manner with respect to the identification signal and necessarily causes the step-down voltage conversion mode to be selected if the input voltage (Uin) is greater than the output voltage (Uout), characterized in that the comparator circuit (VGL) is connected by means of a first input to the input voltage (Uin) and by means of a second input to a variable which at least represents the output voltage, in that a peak detector (D1) and a time store (C1, R3) having a predetermined time constant in the order of magnitude of a multiple of the switching pulses of the step-up/step-down voltage converter is connected to the second input of the comparator circuit (VGL) for the variable which at least represents the output voltage (Uout).

## Revendications

1. Procédé pour régler une tension de sortie (Uout) possédant une amplitude prédéterminée à partir d'une tension d'entrée variable (Uin), mis en oeuvre au moyen d'un convertisseur élévateur/abaisseur de tension, qui, à partir d'un signal de régulation (Uerr), délivre un signal d'identification pour réaliser une commutation entre un fonctionnement en élévateur de tension et un fonctionnement en abaisseur de tension du convertisseur de tension, selon lequel
à partir de la tension d'entrée (Uin) et d'une grandeur présente au moins comme représentative de la tension de sortie (Uout), est déterminé un signal de commutation (Us), situé à un rang supérieur par rapport au signal d'identification et qui provoque impérativement la commutation du convertisseur élévateur/abaisseur de tension sur le fonctionnement en abaisseur de tension, lorsque la tension d'entrée (Uin) est supérieure à la tension de sortie (Uout),
caractérisé par le fait
qu'on soumet la grandeur qui est utilisée au moins comme représentative de la tension de sortie (Uout) à un redressement des valeurs crêtes et à une mémorisation temporelle ultérieure avec une constante de temps prédéterminée possédant une valeur telle qu'un asservissement de la valeur maximale du redressement des valeurs crêtes à la variation de la valeur maximale de la grandeur soumise au redressement des valeurs crêtes est garanti, et
qu'on règle, en outre, la constante de temps de telle sorte que des impulsions de commutation du convertisseur élévateur/abaisseur de tension en un nombre égal à 10, sont contenues dans cette constante de temps.

2. Procédé suivant la revendication 1 en liaison avec un convertisseur push-pull alimenté en courant en tant que convertisseur élévateur/abaisseur de tension, qui possède un transformateur comportant un enroulement primaire, auquel est associée une prise médiane sur laquelle une moyenne tension (Um) du transformateur est prélevée,
caractérisé par le fait

que pour la grandeur présente au moins comme représentative de la tension de sortie (Uout), on utilise, pour la détermination du signal de commutation de rang supérieur, la tension moyenne (Um) du transformateur du convertisseur push-pull alimenté en courant.

3. Montage pour régler une tension de sortie (Uout) possédant une amplitude prédéterminée à partir d'une tension d'entrée variable (Uin), au moyen d'un convertisseur élévateur/abaisseur de tension, qui comporte une logique de commutation (UL), qui, à partir d'un signal de régulation (Uerr), produit un signal d'identification pour réaliser une commutation entre un fonctionnement en élévateur de tension et un fonctionnement en abaisseur de tension du convertisseur de tension, et qui comporte un circuit comparateur (VGL) possédant une sortie pour un signal de commutation (Us), qui est reliée à des éléments de circuit du convertisseur élévateur/abaisseur de tension de telle sorte que le signal de commutation (Us) agit d'une manière prioritaire par rapport au signal d'identification et, dans le cas d'une tension d'entrée (Uin) supérieure à la tension de sortie (Uout), provoque impérativement une commutation sur le fonctionnement en abaisseur de tension du convertisseur,
caractérisé par le fait
que le circuit comparateur (VGL) reçoit, au niveau d'une première entrée, la tension d'entrée (Uin), et au niveau d'une seconde entrée, une grandeur au moins représentative de la tension de sortie, qu'à la seconde entrée du circuit comparateur (VGL) pour la grandeur au moins représentative de la tension de sortie (Uout) sont raccordés un redresseur de valeurs crêtes (D1) et un circuit temporisation (C1,R3) possédant une constante de temps d'un ordre de grandeur égal à un multiple des impulsions de commutation du convertisseur élévateur/abaisseur de tension.

## FIG 1

## FIG 2